(19) Europäisches Patentamt
European Patent Office
Office européen des brevets

(11) EP 2 141 196 B1

(12) **EUROPEAN PATENT SPECIFICATION**

(45) Date of publication and mention of the grant of the patent:
**23.06.2010 Bulletin 2010/25**

(51) Int Cl.:
***C08K 13/00*** *(2006.01)* ***C08L 23/00*** *(2006.01)*
***C08L 23/10*** *(2006.01)* ***C08K 13/02*** *(2006.01)*
***C08L 23/12*** *(2006.01)*

(21) Application number: **08159392.3**

(22) Date of filing: **01.07.2008**

(54) **Reduction of volatiles of stabilized polypropylene/talc compositions by using specific absorbers**

Reduzierung flüchtiger Bestandteile stabilisierter Polypropylen-/Talkumzusammensetzungen mithilfe spezifischer Absorptionsmittel

Réduction de substances volatiles de compositions de polypropylène/talc stabilisées à l'aide d'absorbeurs spécifiques

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**06.01.2010 Bulletin 2010/01**

(73) Proprietor: **Borealis AG**
**1220 Vienna (AT)**

(72) Inventors:
- **Sauer, Christian**
  **4020 Linz (AT)**
- **Stockreiter, Woflgang**
  **4048 Puchenau (AT)**

(74) Representative: **Lux, Berthold**
**Maiwald Patentanwalts GmbH**
**Elisenhof**
**Elisenstraße 3**
**80335 München (DE)**

(56) References cited:
**WO-A-02/04557** **WO-A-98/59002**
**US-A- 3 553 158** **US-A- 6 124 770**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 141 196 B1

## Description

The present invention relates to the use of polyether in a polypropylene composition comprising organic antioxidants.

Polypropylene is the material of choice for many applications. For instance polypropylene in combination with talc is used as back sheets of blister packaging as well as in articles in the automotive interior. Said polypropylene/talc compositions are - generally speaking - good processable and can be individually customized. However such materials must also provide long term stability against environmental impacts, like oxidative degradation, keeping the tailored properties of the polypropylene/talc composition on the desired level. Accordingly antioxidants are added to impair the degradation of the polypropylene/talc compositions. However the antioxidants themselves may be instable under specific environmental stresses, which might lead also to malodour. Over the last years the standard requirements for long term stability have been even steadily tightened, which in turn increased the amounts of additives to satisfy the ambitioned desires, like heat resistance and/or mechanical properties. On the other hand such an increasing amount of additives intensifies the risk of side reactions. Such side reactions, in particular in cases where degradation of antioxidants is involved, lead to side products being quite often volatile. Of course volatile compounds should be kept on low levels in particular as they are not accepted by the customers.

Thus the object of the present invention is to reduce the amount of volatile compounds, in particular of volatile compounds in polypropylene compositions comprising talc and organic antioxidants. There is in particular the desire to reduce the amount of headspace emission according to VDA 277.

The first finding of the present invention is that the amount of volatile compounds is mainly based on the rather rapid degradation of the organic antioxidants. The second finding of the present invention is that the degradation of the antioxidants can be suppressed by polyethers.

Thus the present invention is directed to a polymer composition comprising

(a) polypropylene (A)
(b) talc (B)
(c) organic antioxidants (C),
(d) polyethers (D) having a weight average molecular weight (Mw) of more than 300 g/mol, and
(e) optionally phosphorous antioxidants (E).

Alternatively and preferably the invention is directed to a polymer composition comprising polypropylene (A) and additionally

(a) 1,000 to 550,000 ppm of talc (B),
(b) 100 to 5,000 ppm of phenolic antioxidants (C),
(c) 100 to 5,000 ppm polyethers (D) having a weight average molecular weight (Mw) of more than 300 g/mol, and
(d) optionally 100 to 5,000 ppm of phosphorous antioxidants (E), based on the total composition

As usual 1 ppm of additive corresponds to 1 mg additive in 1 kg composition.

Preferably the inventive polymer composition does not comprise hindered amine light stabilizers (F) and/or slip agents (G), preferably slip agents being fatty acid amides.

Surprisingly it has been found out that the above defined composition show significant reduction in headspace emission, in particular show significant reduction of 2-methyl-1-propene, compared with polypropylene compositions comprising talc and organic antioxidants but no polyethers, in particular no polyethylene glycols and/or epoxy resins (see tablel). Such a reduced headspace emission is accomplished with the polyethers but not with other possible candidates like, magnesium hydroxide or anthracene.

In the following the present invention is described in more detail.

The polypropylene (A) used in the inventive polypropylene composition can be any polypropylene, in particular polypropylenes suitable for the automotive interior and/or for back sheets of blister packaging. Accordingly a preferred polypropylene (A) comprises (is) a heterophasic propylene copolymer (A'). Heterophasic polypropylene systems are well known in the art and are systems in particular obtained in an at least two step process resulting in a multiphase structure comprising a polypropylene matrix ($A^1$), preferably an isotactic polypropylene matrix ($A^1$), and inclusions dispersed therein comprising amorphous elastomer ($A^2$). Such systems can be easily tailored for the requirements needed by setting the comonomer content in the polypropylene matrix ($A^1$) and in the amorphous elastomer ($A^2$) respectively. Such a heterophasic propylene copolymer (A') may have an $MFR_2$ in the range of 2.0 to 80.0 g/10min, more preferably in the range of 5.0 to 50.0 g/10min, still more preferably in the range of 7.0 to 20.0 g/10min. Typically such a heterophasic propylene copolymer (A') has an amorphous elastomer ($A^2$) being a propylene-ethylene rubber (EPR) ($A^2$). The polypropylene matrix ($A^1$) can be either a propylene homopolymer or a propylene copolymer, wherein the latter is especially

preferred.

The total comonomer, preferably ethylene, content is in the range of 2 to 25 wt.-% based on the total heterophasic propylene copolymer (A'). The amount of xylene solubles may be in the range of 10 to 40 wt.-%, preferably 15 to 30 wt.-%.

Of course the polypropylene (A) may additionally comprise beside the heterophasic propylene copolymer (A') a high density polyethylene (HDPE) having for instance a density in the range of 0.954 to 0.966 g/cm3 and a melt flow rate ($MFR_2$ at 190°C) of 0.1 to 5.0 g/10min. Further the polypropylene (A) may also comprise additionally EPR, propylene-ethylene copolymers and/or ethylene-octene copolymers.

It is however preferred that the polypropylene (A) is the only polymer component in the inventive polymer composition.

Preferably the polypropylene (A) is present in the inventive composition in the amount of at least 50.0 wt.-%, more preferably at least 60.0 wit.-%, yet more preferably at least 70.0 wt.-%, still more preferably of at least 75.0 wt.-%.

Beside the polypropylene the invention is in particular defined by its additives.

Accordingly to be useful in the above mentioned applications the inventive polymer composition must comprise tale (B). Tale (B) is usually used to support the crystallization behaviour of the polymer material. It can be also employed as a shrinkage reducing additive and/or reinforcing agent. In any case talc (B) has been recognized in the above mentioned applications as an indispensable part of polypropylene compositions. Talc (B) is a mineral composed of hydrated magnesium silicate and may comprise low amounts of residues, like iron oxide (FeO) and/or iron silicate. Generally the amounts of residues do not exceed 5.0 wt.-%. Thus it is preferred that the tale (B) comprise 0.1 to 3.5 wt.-%, more preferably 0.1 to 3.0 wt.-%, residues, i.e. residues comprising iron, like iron oxide or iron silicate. Of course talc (B) may also be a chlorite-talc as the commercial product "Steamic T1 C A" of Luzenac.

Preferably the tale (B) according to this invention has a particle size (d50%) of below 3.0 μm (d50% indicates that 50 wt-% of the talc has a particle size below 3.0 μm) and/or a particle size (d98%) of below 15.0 μm (d98% indicates that 98 wt-% of the talc has a particle size below 15.0 μm), more preferably a particle size (d50%) of below 2.0 μm and/or a particle size (d98%) of below 10.0 μm, yet more preferably a particle size (d50%) of below 1.0 μm and/or a particle size (d98%) of below 5.0 μm.

As further additives organic antioxidants (C) are required. Antioxidants are needed to impair oxidative degradation of the polypropylene. However the antioxidants themselves may be instable in case they come in contact with other additives. In the present case it has been observed that the organic antioxidants are rather quickly degraded in a polypropylene composition comprising talc. The degradation of the organic oxidants can be very easily deducted in the headspace emission according to VDA 277. The emission spectrum shows degradation products (for instance 2-methyl-1-propene) originating from the organic antioxidants. Such degradation products are undesired. Without to be bond on the theory, the degradation of the organic antioxidants may be catalyzed due to the presence of the talc and/or its residues dispersed therein. On the other hand one can neither abstain from tale nor from organic antioxidants in the desired applications, since this would deteriorate the other properties of the polymer composition needed in the technical fields as defined in the instant invention. Thus as stated above organic antioxidants (C) must be present in the inventive polymer composition.

Preferred organic antioxidants (C) are phenolic antioxidants (C').

The term "phenolic antioxidant" (C') as used in the instant invention stands for any compound capable of slowing or preventing the oxidation of the polymer component, i.e. the polypropylene. Additionally such a phenolic antioxidant (C') must of course comprise a phenolic residue.

Better results can be achieved in case the phenolic antioxidants (C') are sterically hindered. The term "Sterically hindered" according to this invention means that the hydroxyl group (HO-) of the phenolic antioxidants (C') is surrounded by sterical alkyl residues.

Accordingly the phenolic antioxidants (C') preferably comprise the residue of formula (I)

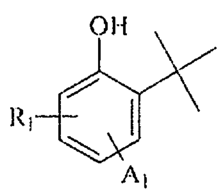

(I)

wherein

$R_1$ being located at the ortho- or meta-position to the hydroxyl-group and $R_1$ is $(CH_3)_3C$-, $CH_3$- or H, preferably $(CH_3)_3C$-, and

$A_1$ constitutes the remaining part of the phenolic antioxidant (C') and is preferably located at the para-position to the hydroxyl-group.

Preferably the phenolic antioxidants (C') preferably comprise the residue of formula (1a)

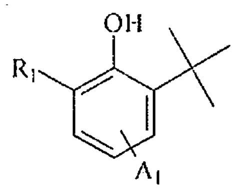

(Ia)

wherein

$R_1$ is $(CH_3)_3C$-, $CH_3$- or H, preferably $(CH_3)_3C$-, and

$A_1$ constitutes the remaining part of the phenolic antioxidant (C').

Preferably $A_1$ is in para-position to the hydroxyl-group.

Additionally the phenolic antioxidants (C') shall preferably exceed a specific molecular weight. Accordingly the phenolic antioxidants (C') have preferably a molecular weight of more than 785 g/mol, more preferably more than 1100 g/mol. On the other hand the molecular weight should be not too high, i.e. not higher than 1300 g/mol. A preferred range is from 785 to 1300 g/mol, more preferably from 1000 to 1300 g/mol, yet more preferably from1100 to 1300 g/mol.

Further the phenolic antioxidants (C') can be additionally defined by the amount of phenolic residues, in particular by the amount of phenolic residues of formula (1) or (Ia). Accordingly the phenolic antioxidants (C') may comprise(s) 1, 2, 3, 4 or more phenolic residues, preferably 1, 2, 3, 4 or more phenolic residues of formula (I) or (Ia).

Moreover the phenolic antioxidants (C') comprise mainly only carbon atoms, hydrogen atoms and minor amounts of O-atoms, mainly caused due to the hydroxyl group (HO-) of the phenolic residues. However the phenolic antioxidants (C') may comprise additionally minor amounts ofN, S and P atoms. Preferably the phenolic antioxidants (C') are constituted by C, H, O, N and S atoms only, more preferably the phenolic antioxidants (C') are constituted by C, H and O only.

As stated above the phenolic antioxidants (C') shall have a rather high molecular weight. A high molecular weight is an indicator for several phenolic residues. Thus it is in particular appreciated that the phenolic antioxidants (C') have 4 or more, especially 4, phenolic residues, like the phenolic residue of formula (1) or (Ia).

As especially suitable phenolic antioxidants (C') have been recognized compounds comprising at least one residue of formula (II)

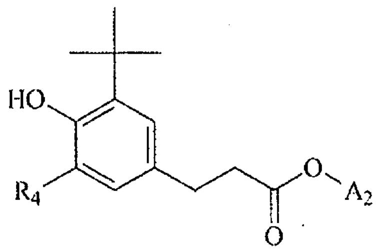

(II)

wherein

$R_4$ is $(CH_3)_3C$-, $CH_3$-, or H, preferably $(CH_3)_3C$-, and

$A_2$ constitutes the remaining part of the phenolic antioxidant (C').

Considering the above requirements the phenolic antioxidants (C') are preferably selected from the group consisting of

2.6-di-tert-butyl-4-methylphenyl (CAS no. 128-37-0; M 220 g/mol),

pentaerythrityl-tetrakis (3-(3,5-di-tert-butyl-4-hydroxyphenyl) propionate (CAS no. 6683-19-8; M 1178 g/mol),

octadecyl 3-(3',5'-di-tert-butyl-4-hydroxyphenyl)propionate (CAS no. 2082-79-3; M 531 g/mol)

1,3,5-trimethyl-1-2,4,6-tris-(3,5-di-tert-butyl-4-hydroxybenzyl) benzene (CAS no. 1709-70-2; M 775 g/mol),

2,2'-thiodithylenebis (3,5-di-tert-butyl-4-hydroxyphenyl) propionate (CAS no. 41484-35-9; M 643 g/mol),
calcium bis(ethyl 3,5-di-tert-butyl-4-hydroxybenzylphosphonate) (CAS no. 65140-91-2; M 695 g/mol),
1,3,5-tris(3'.5'-di-tert. butyl-4'-hydroxybenzyl)-isocyanurate (CAS no. 27676-62-6, M 784 g/mol),
1,3,5-tris(4-tert. butyl-3-hydroxy-2,6-dimethylbenzyl)-1,3,5-triazine-2,4,6-(1H,3H,5H)-trione (CAS no. 40601-76-1, M 813 g/mol),
bis(3,3-bis(3'-tert-butyl-4'-hydroxyphenyl)butanic acid) glycolester (CAS no. 32509-66-3; M 794 g/mol),
4,4'-thiobis(2-tert-butyl-5-methylphenol) (CAS no. 96-69-5; M 358 g/mol),
2,2'-methylene-bis-(6-(1-methyl-cyclohexyl)-para-cresol) (CAS no. 77-62-3; M 637 g/mol),
3,3'-bis(3,5-di-tert-butyl-4-hydroxyphenyl)-N,N'-hexaniethylenedipropionamide (CAS no. 23128-74-7; M 637 g/mol),
2,5,7,8-tetramethyl-2-(4',8',12'-trimethyltridecyl)-chroman-6-ol (CAS no. 10191-41-0; M 431 g/mol),
2,2-ethylidenebis (4,6-di-tert-butylphenol) (CAS no. 35958-30-6; M 439 g/mol),
1,1,3-tris(2-methyl-4-hydroxy-5'-tere-butylphenyl) butane (CAS no. 1843-03-4; M 545 g/mol),
3,9-bis(1,1-dimethyl-2-(beta-(3-tert-butyl-4-hydroxy-5-methylphenyl)propionyloxy)ethyl)-2,4,8,10-tetraoxaspiro[5,5]undecane (CAS no. 90498-90-1; M 741 g/mol),
1,6-hexanediyl-bis(3,5-bis(1,1dimethylethyl)-4-hydroxybenzene)propanoate) (CAS no. 35074-77-2; M 639 g/mol),
2,6-di-tert-butyl-4-nonylphenol (CAS no. 4306-88-1; M 280 g/mol),
4,4'-butylidencbis(6-tert-butyl-3-methylphenol (CAS no. 85-60-9; M 383 g/mol);
2,2'-methylene bis(6-tert-butyl-4-methylphenol) (CAS no. 119-47-1; M 341 g/mol),
triethylenylycol-bis-(3-tert-butyl-4-hydroxy-5-methylphenyl) propionate (CAS no. 36443-68-2; M 587 g/mol),
a mixture of C13 to C15 linear and branched alkyl esters of 3-(3',5'-di-t-butyl-4'-hydroxyphenyl) propionic acid (CAS no. 171090-93-0; $M_w$ 485 g/mol),
6,6'-di-tert-butyl-2,2'-thiodip-cresol (CAS no. 90-66-4; M 359 g/mol),
diethyl-(3,6-di-tert-butyl-4-hydroxybenzyl) phosphate (CAS no. 976-56-7; M 356 g/mol),
4,6-bis (octylthiomethyl)-o-cresol (CAS no. 110553-27-0; M 425 g/mol),
benzenepropanoic acid, 3,5-bis(1,1-dimehtyl-ethyl)-4-hydroxy-,C7-C9-branched and linear alkyl esters (CAS no. 125643-61-0; $M_w$ 399 g/mol),
1,1,3-tris[2-methyl-4-[3-(3,5-di-tert-butyl-4-hydroxyphenyl)propionyloxy]-5-tert-butylphenyl]butane (CAS no. 180002-86-2; M 1326 g/mol),
mixed styrenated phenols (M ca 320 g/mol; CAS no. 61788-44-1; M ca. 320 g/mol),
butylated, octylated phenols (M ca 340 g/mol; CAS no. 68610-06-0; M ca 340 g/mol), and
butylated reaction product of p-cresol and dicyclopentadiene ($M_w$ 700 to 800 g/mol; CAS no. 68610-51-5; $M_w$ 700 - 800 g/mol).

More preferably the phenolic antioxidants (C') are selected from the group consisting of
pentacrythrityl-tetrakis (3-(3,5-di-tert-butyl-4-hydroxyphenyl) propionate (CAS no. 6683-19-8; M 1178 g/mol),
octadecyl 3-(3',5'-di-tert-butyl-4-hydroxyphenyl)propionate (CAS no. 2082-79-3; M 531 g/mol)
bis(3,3-bis(3'-tert-butyl-4'-hydroxyphenyl)butanic acid) glycolester(CAS no. 32509-66-3 M 794 g/mol),
3,3'-bis(3,5-di-tert-butyl-4-hydroxyphenyl)-N,N'-hexamethylenediloropionamide (CAS no. 23128-74-7; M 637 g/mol),
3,9-his(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-his(3,5-bis(1,1dimethylethyl)-4-hydroxybenzene)propanoate (CAS no. 35074-77-2; M 639 g/mol),
triethylenglycol-bis-(3-tcrt-butyl-4-hydroxy-5-methylphenyl) propionate (CAS no. 36443-68-2; M 587 g/mol),
a mixture of C13 to C15 linear and branched alkyl esters of 3-(3',5'-di-t-butyl-4'-hydroxyphenyl) propionic acid (CAS no. 171090-93-0; $M_w$ 485 g/mol), and
benzenepropanoic acid, 3,5-bis(1,1-dimehtyl-eihyl)-4-hydroxy-,C7-C9-branched and linear alkyl esters (CAS no. 125643-61-0; $M_w$ 399 g/mol),

The most preferred phenolic antioxidant (C') is pentaerythrityl-tetrakis (3-(3,5-di-tert-butyl-4-hydroxyphenyl) propionate (CAS no. 6683-19-8; M 1178 g/mol) preferably having the formula (III)

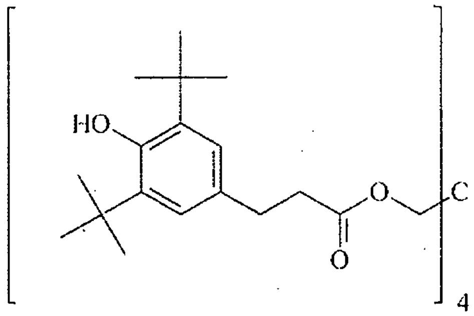

(III)

The present inventive polymer composition may comprise different organic antioxidants (C), like phenolic antioxidants (C'), as defined in the instant invention, however it is preferred that it comprises only one type of organic antioxidant (C), like phenolic antioxidant (C'), as defined herein.

The present polymer composition can additionally comprise in addition to the organic antioxidants (C) one or more phosphorous antioxidants (E). More preferably the polypropylene composition comprises only one type of phosphorous antioxidant (E). Preferred phosphorous antioxidants (E) are selected from the group consisting of tris-(2,4-di-tert-butylphenyl) phosphite (CAS no. 31570-04-4; M 647 g/mol),
tetrakis-(2,4-di-tert-butylphcnyl)-4,4'-bipllecnylen-di-phosphonite (CAS no. 38613-77-3; M 991 glmol),
bis-(2,4-di-tert-butylphenyl)-pentaerythrityl-di-phosphite (CAS no. 26741-53-7; M 604 g/mol),
di-stearyl- pelltaerythrityl-di-phosphite (CAS no. 3806-34-6; M 733 g/mol),
tris-nonylphenyl phosphite (CAS no. 26523-78-4; M 689 g/mol),
bis(2,6-di-tert-butyl-4-methylphenylphenyl)pentaerythrityl-di-phosphite (CAS no. 80693-00-1; M 633 g/mol),
2,2'-methylenebis (4,6-di-tert-butylphenyl) octyl-phosphite (CAS no. 126050-54-2; M 583 g/mol),
1,1,3-tris (2-methyl-4-ditridecyl phosphite-5-tert-butylphenyl) butane (CAS no. 68958-97-4; M 1831 g/mol),
4,4'-butylidenebis (3-methyl-6-tert-butylphenyl-di-tridecyl) phosphite (CAS no. 13003-12-8; M 1240 g/mol),
bis-(2,4-dicumylphenyl)pentaerythritol diposphite (CAS no. 154862-43-8; M 852 g/mol),
bis(2-methyl-4,6-his(1,1-dimethylethyl) phenyl) phosphorous acid ethylester (CAS no. 145650-60-8; M 514 g/mol),
2,2',2"-nitrilo trieihyl-tris(3,3',5,5'-tetra-tert-butyl-1,1'-biphenyl-2,2'-diyl)phosphite) (CAS no. 80410-33-9; M 1465 g/mol)
2,4,6-tris(tert-butyl)phcnyl-2-butyl-2-ethyl-1,3-propandiolphosphit (CAS no. 161717-32-4, M 450 g/mol),
2,2'-ethyliden-bis(4,6-di-tcrt-butylphenyl)fluorphosphonit (CAS no. 118337-09-0; M 487 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; M 660 g/mol),
tetrakis-(2,4-di-tert-butyl-5-methylphenyl)-4,4'-biplaeriylen-di-phosphite (CAS no. 147192-62-9; M 1092 g/mol), and
1,3-bis-(diphenylphosphino)-2,2-dimethylpropane; (CAS no. 80326-98-3; M 440.5 g/mol).

Especially suitable are organic phosphites, in particular those as defined in the above list, as phosphorous antioxidants (E).

The most preferred phosphorous antioxidant (E) is tris-(2,4-di-tert-butylphenyl) phosphite (CAS no. 31570-04-4; M 647 g/mol).

As stated above known polypropylene compositions comprising talc and organic antioxidants suffer from a rather quick degradation of the antioxidants. Such quick degradation - without be bonded on this theory - may be caused by the presence of talc and more importantly by the residues within in the talc. These residues may catalyse the degradation of the organic antioxidants. Thus, any means which may impede the catalytic activity of talc and/or its residues in view of the organic antioxidants reduces the degradation process and associated therewith minimises the headspace emission. It has been in particular discovered that polyethers (D) are in particular useful. Polyethers (D) are generally speaking polymers with more than one ether group. Accordingly polyethers (D) are preferably polyethers with a weight average molecular weight ($M_w$) of at least 300 g/mol, more preferably of at least 700 g/mol. More preferably such polyethers (D) have a weight average molecular weight ($M_w$) of not more than 13,000 g/mol. In one preferred embodiment the polyethers (D) according to this invention have weight average molecular weight ($M_w$) of 300 to 12,000 g/mol, more preferably of 700 to 8,000 g/mol and yet more preferably of 1150 to 8,000 g/mol.

Without be bonded on the theory the polyethers (D) as used in the present invention are able to bond on the surface of the talc and thus form a kind of sheeting surrounding the talc particles. The bonding may be a covalent bonding and/or ionic bonding. Accordingly the polyethers (D) impede contacting of the organic antioxidants (C) with the talc (B). Thus any degradation caused by talc (B) or its residues is therewith minimized or avoided.

As especially useful polyethylene glycols ($D^1$) and/or epoxy resins ($D^2$) have been recognized.

In case polyethylene glycols ($D^1$) are used the following are preferred: polyethylene glycol having a weight average molecular weight ($M_w$) of about 4,000 g/mol (CAS-no 25322-68-3), polyethylene glycol having a weight average molecular weight ($M_w$) of about 8,000 g/mol (CAS-no 25322-68-3), polyethylene glycol having a weight average molecular weight ($M_w$) of about 10,000 g/mol (CAS-no 25322-68-3) and/or polyethylene glycol having a weight average molecular weight ($M_w$) of about 20,000 g/mol (CAS-no 25322-68-3). Especially preferred polyethylene glycols ($D^1$) are PEG 4000 and/or PEG 10000 of Clariant.

Epoxy resins ($D^2$) are in particular appreciated as they comprise reactive epoxy groups simplifying a covalent bonding of the epoxy resin ($D^2$) with tale (B). Accordingly the epoxy resins ($D^2$) are tightly bonded on the surface of the talc (B) and therefore provide an especially suitable protection against degradation of the organic antioxidants (C). Even more preferred the epoxy resins ($D^2$) comprise phenyl groups. Such phenyl groups have the additional advantage that they act as scavengers for possible degradation products of the organic antioxidants (C). Without be bonded on the theory it is very likely that the phenyl groups of the epoxy resins ($D^2$) will be Friedel-Crafts alkylated. Typically the alkylating groups originate from the organic antioxidants (C). One example is 2-methyl-1-propene, a typical degradation product of hindered phenolic antioxidants (C') as defined above. Accordingly it is preferred that the inventive polymer composition comprises epoxy resins ($D^2$) comprising units derived from a monomer of the formula (IV)

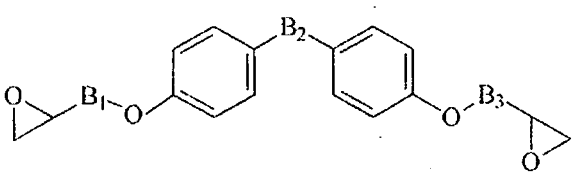

(IV)

wherein

13, and 13; are independently selected from the group consisting of $-(CH_2)-$, $-(CH_2)_2-$, $-(CH_2)_3-$, $-(CH_2)_4-$, and $-(CH_2)_5-$, preferably $B_1$ and $B_3$ are $-(CH_2)-$, and

$B_2$ is selected from the group consisting of $-((CH_3)_2C)-$, $-((CH_3)_2C)_2-$, $-((CH_3)_2C)_3-$, $-CH_2-((CH_3)_2C)-$, $-((CH_3)_2C)-CH_2$, $-CH_2-((CH_3)_2C)-CH_2-$ and $-CH_2-((CH_3)_2C)_2-CH_2-$,

preferably $B_2$ is $-((CH_3)_2C)-$. Thus it is appreciated that the epoxy resins ($D^2$) comprises units derived from a monomer of the formula (IV-a)

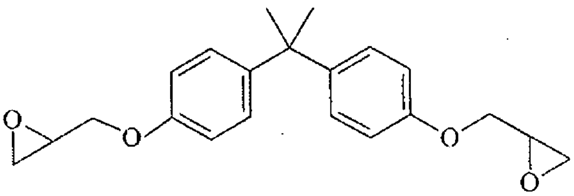

(IV-a).

Further it is preferred that the epoxy resins ($D^2$) comprises not only units derived from a monomer of the formula (IV) or (IV-a) but additionally units derived from a monomer of the formula (V)

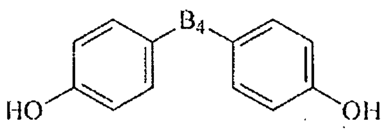

(V)

wherein

$B_4$ is selected from the group consisting of-$((CH_3)_2C)$-, -$((CH_3)_2C)_2$- -$((CH_3)_2C)_3$-, - $CH_2$-$((CH_3)_2C)$-, -$((CH_3)_2C)$-$CH_2$, -$CH_2$-$((CH_3)_2C)$-$CH_2$- and -$CH_2$-$((CH_3)_2C)_2$-$CH_2$-.
Especially preferred are monomers of formula (V), wherein $B_4$ is -$((CH_3)_2C)$-.

Accordingly the epoxy resins ($D^2$) have preferably the formula (VI)

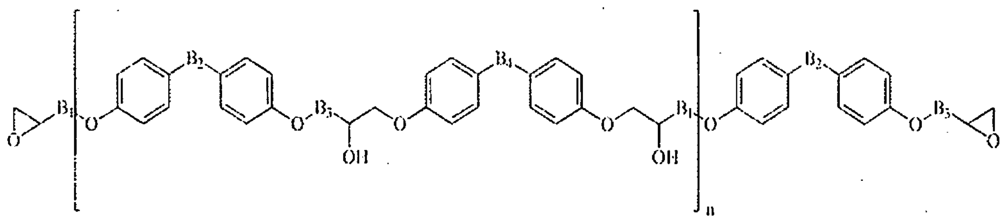

(VI)

wherein
$B_1$ and $B_3$ are independently selected from the group consisting of -$(CH_2)$-, -$(CH_2)_2$-, -$(CH_2)_3$-, -$(CH_2)_4$-, and -$(CH_2)_5$-,
$B_2$ and $B_4$ are independently selected from the group consisting of-$((CH_3)_2C)$-, -$((CH_3)_2C)_2$-, -$((CH_3)_2C)_3$-, -$CH_2$-$((CH_3)_2C)$-, -$((CH)_2C)$-$CH_2$, -$CH_2$-$((CH_3)_2C)$-$CH_2$- and -$CH_2$-$((CH_3)_2C)_2$-$CH_2$-, and
n is from 1 to 20.

Additionally it is preferred that the epoxy resins ($D^2$) have an epoxy index in the range of 1.10 to 2.00 Eq/kg, more preferably 1.12 to 1.60 Eq/kg, wherein the epoxy index corresponds to the number of epoxy functions in respect of 100 g of resin.

The most preferred epoxy resin ($D^2$) is poly (2,2-bis[4-(2,3-cpoxypropoxy]-phenyl] propane-co-(2-chloromethyl oxirane) (CAS-no 25036-25-3), in particular with an epoxy index as defined in the previous paragraph.

The present inventive polymer composition may comprise different polyethers (D) as defined in the instant invention, however it is preferred that it comprises only one type of polyether (D) as defined herein. Most preferably the inventive polymer compositions comprises as polyether (D) only an epoxy resin ($D^2$) as defined in herein.

To obtain especially good results the components of the polymer composition of the instant invention should be present in specific amounts.

Accordingly it is appreciated that polymer composition comprises

(a) at least 50 wt.-%, preferably at least 60 wt.-%, more preferably at least 70 wt.-% polypropylene (A), like heterophasic propylene copolymer (A'),
(b) 1,000 to 550,000 ppm, preferably 50,000 to 500,000 ppm, more preferably 100,000 to 400,000 ppm, yet more preferably 150,000 to 300,000 ppm, of talc (B),
(c) 100 to 5,000 ppm, preferably 500 to 5,000 ppm, more preferably 500 to 3,000 ppm, yet more preferably 200 to 1,000 ppm, of phenolic antioxidants (C), like pentaerythrityl-tetrakis (3-(3,5-di-tert-butyl-4-hydroxyphenyl) propionate (CAS no. 6683-19-8; M 1178 g/mol),
(d) 100 to 20,000 ppm, preferably 100 to 10,000 ppm, more preferably 500 to 5,000 ppm, yet more preferably 500 to 3,000 ppm, still more preferably 800 to 3,000 ppm, polyethers (D), preferably polyethylene glycols ($D^1$) and/or epoxy resins ($D^2$), like poly (2,2-bis[4-(2,3-epoxypropoxy]-phenyl] propane-co-(2-chloromethyl] oxirane) (CAS-no 25036-25-3), and
(e) optionally 100 to 5,000 ppm, preferably500 to 3,000 ppm, more preferably 500 to 1,500 ppm, yet more preferably 1,000 to 1,500 ppm, of phosphorous antioxidants (E), like tris-(2,4-di-tert-butylphenyl) phosphite (CAS no. 31570-04-4; M 647 g/mol),

Of course the present invention may comprise further additives like calcium stearate and/or pigments, for instance in the form of a master batch.

However it is especially appreciated as stated above that the polymer composition is free of hindered amine light stabilizers (F) and/or slip agents (G), preferably slip agents being fatty acid amides.

According to the present invention hindered amine light stabilizers (F) are in particular 2,6-alkyl-piperidine derivatives, lile 2,2,6,6-tetramethyl-piperidine derivatives. Thus it is appreciated that the present polymer composition is free of such piperidine derivatives

Additionally the polymer composition shall be free of slip agents (G) being a fatty acid amide. More preferably the polymer composition shall be free of slip agents (G) being unsaturated fatty acid amides. The amount of carbons of the fatty acids is preferably in the range of C10 to C25 carbon atoms.

The polymer composition according to this invention is obtained by extruding the polymer and thereby adding the additives as mentioned in the instant invention. Preferably a twin-screw extruder is used, like the twin-screw extruder ZSK40. The polymer composition pelletized with the twin-screw extruder ZSK 40 is used in the headspace emission test according to VDA 277.

The present invention is additionally directed to the use of the polymer composition as a covering element for vehicles and/or back sheets of blister packaging, in particular to reduce the headspace emission according to VDA 277, in particular to reduce the emission of 2-methyl-propene according to VDA 277.

Furthermore the present invention is directed to articles, preferably automotive articles, more preferably automotive interior articles, like dashboards, door claddings, armrests or other interior trims, comprising the polymer composition as defined herein. The invention is further directed to blister packaging, in particular to the back sheets of blister packaging, comprising the use of the instant invention.

Finally the present invention is directed to the use of polyethers (D), preferably to the use of polyethylene glycols ($D^1$) and/or epoxy resins ($D^2$), as defined in the instant invention to reduce the headspace emission according to VDA 277, in particular to reduce the emission of 2-methyl-1-propene according to VDA 277, of a polymer composition, preferably of a polymer composition comprising talc, more preferably of a polymer composition comprising talc and organic antioxidants. Thus the present invention is in particular directed to the use of polyethers (D), preferably to the use of polyethylene glycols ($D^1$) and/or epoxy resins ($D^2$), as defined in the instant invention to reduce the headspace emission according to VDA 277, in particular to reduce the emission of 2-methyl-1-propene according to VDA 277, of a polymer composition comprising talc (B) and antioxidants (C) as defined in the instant invention but no polyethers (D). Accordingly the use of the polyethers (D), preferably the use of polyethylene glycols ($D^1$) and/or epoxy resins ($D^2$), in the polymer composition as defined in the instant invention shall reduce the headspace emission according VDA 277, in particular shall reduce the emission of 2-methyl-1-propene according to VDA 277, of at least 30 %, preferably of at least 40 %, yet more preferably of at least 45 %, wherein the percentage is defined as follows:

$$\% = \left(1 - \left[\frac{(\mu gC/g)\text{ of a polymer composition comprising an organic metal deactivator}}{(\mu gC/g)\text{ of the same polymer composition but without organic metal deactivator}}\right]\right) * 100 .$$

The present invention is further described by way of examples.

## EXAMPLES

**1.** The following definitions of terms and determination of methods apply for the above general description of the invention as well as to the below examples unless otherwise defined.

### Molecular weights, molecular weight distribution (Mn, Mw, MWD)

Mw/Mn/MWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**$MFR_2$** (230 **°C)** is measured according to ISO 1133 (230 °C, 2.16 kg load).
**$MFR_2$ (190 °C)** is measured according to ISO 1133 (190 °C, 2.16 kg load).
**Ethylene content** is measured with Fourier transform infrared spectroscopy (FTIR) calibrated with $^{13}$C-NMR. When measuring the ethylene content in polypropylene, a thin film of the sample (thickness about 250 μm was prepared by hot-pressing. The area of absorption peaks 720 and 733 $cm^{-1}$ was measured with PerkinEimer FTIR 1600 spectrometer. The method was calibrated by ethylene content data measured by $^{13}$C-NMR.
**Particle size** is measured according to ISO 13320-1:1999

**The xylene solubles (XS, wt.-%):** Content of Xylene solubles (XS) is determined at 23 °C according ISO 6427.

**VDA 277 (available for instance from "Dokumentation Kraftfahrwesen (DKF); Ulrichstraße 14, 74321 Bietigheim Bissingen)**

The content of volatiles is determined according to VDA 277:1995 using a gas chromatography (GC) device with a WCOT-capillary column (wax type) of 0.25 mm inner diameter and 30 m length. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and average carrier-speed 22 - 27 cm/s.

In addition to the FID detector for the summary volatile evaluation a MS detector is used for the evaluation of the single volatile components. A specific Quadropol MS was used with the following settings: 280 °C transfer-line temperature, scan method with scanning rate of 15 - 600 amu, relative EMV mode, mass calibration with standard spectra autotune, MS source temperature of 230 °C and MS Quad temperature of 150 °C.

**Preparation of examples**

Table 1: Properties of the examples

| | | **CE 1** | **E 1** | **E 2** | **E 3** | **E 4** | **E 5** | **E 6** |
|---|---|---|---|---|---|---|---|---|
| $MFR_2$ | [g/10min] | 10.5 | 10.5 | 10.4 | 10.2 | 10.2 | 11.7 | 11.1 |
| HECO | [%] | 79.678 | 79.178 | 79.178 | 79.178 | 79.178 | 79.178 | 79.178 |
| PA | [%] | 0.190 | 0.190 | 0.190 | 0.19 | 0.190 | 0.190 | 0.190 |
| OA | [%] | 0.100 | 0.100 | 0.100 | 0.100 | 0.100 | 0.100 | 0.100 |
| Calcium stearate | [%] | 0.032 | 0.032 | 0.032 | 0.032 | 0.032 | 0.032 | 0.032 |
| talc | [%] | 20.000 | 20.000 | 20.000 | 20.000 | 20.000 | 20.000 | 20.000 |
| epoxy resin A | [%] | - | 0.500 | - | - | - | - | - |
| epoxy resin B | [%] | - | - | 0.500 | - | - | - | - |
| epoxy resin C | [%] | - | - | - | 0.500 | - | - | - |
| epoxy resin D | [%] | - | - | - | - | 0.500 | - | - |
| polyethylene glycol E | [%] | - | - | - | - | - | 0.500 | - |
| polyethylene glycol F | [%] | - | - | - | - | - | - | 0.500 |
| total content volatile [VDA 277] | [μgC/g] | 155 | 44 | 42 | 43 | 44 | 44 | 45 |
| 2-methyl-1-propene [VDA 277] | [μgC/g] | 110 | 0.1 | 0.8 | 0.5 | 0.9 | 1 | 1.4 |

| | |
|---|---|
| HECO: | heterophasic polypropylene copolymer, namely the commercial product BE170MO of Borealis ($MFR_2$ of 13 g/10 min; xylene soluble content of 15 wt.-%, ethylene content of 7 wt.-% |
| PA: | phosphorous antioxidant, namely tris (2,4-di-*t*-butylphenyl) phosphite (CAS no 31570-04-4) [IRGAFOS 168] |
| OA: | organic antioxidant, namely pentacrythrityl-tetrakis(3-(3',5'-di-tert. butyl-4-hydroxyphenyl)-propionate (CAS no 6683-19-8) [IRGANOX 1010] |
| epoxy resin A: | poly (2,2-bis[4-(2.3-epoxypropoxy]-phenyl] propane-co-(2-chloromechyl oxirane) (CAS no 25036-25-3) [Epicote 1004] |
| epoxy resin B: | poly (2,2-bis[4-(2,3-epoxypropoxy]-phenyl] propane-co-(2-chloromethyl oxirane) having a epoxy index of 1.68 to 1.75 Eq/kg (CAS no 25036-25-3) [Araldite GT 7072] |
| epoxy resin C: | poly (2,2-bis[4-(2,3-epoxypropoxy]-phenyl] propane-co-(2-chloromethyl oxirane) having a epoxy index of 1.37 to 1.56 Eq/kg (CAS no 25036-25-3) [Araldite GT 6063] |
| epoxy resin D: | poly (2,2-bis[4-(2,3-epoxypropoxy]-phenyl] propane-co-(2-chloromethyl oxirane) having a epoxy index of 1.12 to 1.20 Eq/kg (CAS no 25036-25-3) [Araldite GT 6084] |

(continued)

| | CE 1 | E 1 | E 2 | E 3 | E 4 | E 5 | E 6 |
|---|---|---|---|---|---|---|---|
| polyethylene glycol E: | polyethylene glycol having a weight average molecular weight $M_w$ of 4000 g/mol | | | | | | |
| polyethylene glycol F: | polyethylene glycol having a weight average molecular weight $M_w$ of 10000 g/mol | | | | | | |

## Claims

1. Use of polyethers (D) to reduce the headspace emission according to VDA 277, preferably the headspace emission of 2-methyl-propene according to VDA 277, of a polymer, wherein the polyethers (D) having a weight average molecular weight ($M_w$) of more than 300 g/mol

2. Use according to claim 1, wherein the polyethers (D) are part of a polymer composition, wherein said composition comprises in addition to the polyethers (D) polypropylene (A), talc (B), organic antioxidants (C), and optionally phosphorous antioxidants (E).

3. Use according to claim 1or 2, wherein the composition comprises

   (a) 1,000 to 550,000 ppm of talc (B),
   (b) 100 to 5,000 ppm of phenolic antioxidants (C),
   (c) 100 to 5,000 ppm polyethers (D) having a weight average molecular weight ($M_w$) of more than 300 g/mol, and
   (d) optionally 100 to 5,000 ppm of phosphorous antioxidants (E), based on the composition.

4. Use according to any one of the preceding claims, wherein the polymer composition does not comprise hindered amine light stabilizers (F) and/or slip agents (G), preferably slip agents being fatty acid amides.

5. Use according to any one of the preceding claims, wherein the polymer composition comprises at least 50 wt.-% polypropylene.

6. Use according to any one of the preceding claims, wherein the polypropylene (A) is a heterophasic propylene copolymer (A') comprising a polypropylene matrix ($A^1$) and an amorphous elastomer ($A^2$).

7. Use according to any one of the preceding claims, wherein the talc (B) comprises iron residues, preferably iron oxide (FeO) and/or iron silicate.

8. Use according to any one of the preceding claims, wherein the organic antioxidants (C) are phenolic antioxidants (C'), preferably sterically hindered phenolic antioxidants (C').

9. Use according to any one of the preceding claims, wherein the phenolic antioxidants (C') comprise at least one residue of formula (II)

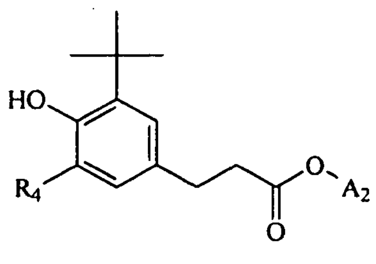

wherein
$R_4$ is $(CH_3)_3C$-, $CH_3$-, or H, preferably $(CH_3)_3C$-, and
$A_2$ constitutes the remaining part of the phenolic antioxidant (C').

**10.** Use according to any one of the preceding claims, wherein the polyethers (D) are polyethylene glycols ($D^1$) and/or epoxy resins ($D^2$).

**11.** Use according to any one of the preceding claims, wherein the epoxy resins ($D^2$) comprise at least one phenyl group.

**12.** Use according to any one of the preceding claims, wherein the epoxy resins ($D^2$) comprise units derived from a monomer of the formula (IV)

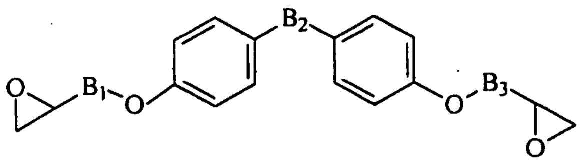

(IV)

wherein
$B_1$ and $B_3$ arc independently selected from the group consisting of $-(CH_2)-$, $-(CH_2)_2-$, $-(CH_2)_3-$, $-(CH_2)_4-$, and $-(CH_2)_5-$, and
$B_2$ is selected from the group consisting of $-((CH_3)_2C)-$, $-((CH_3)_2C)_2-$, $-((CH_3)_2C)_3-$, $-CH_2-((CH_3)_2C)-$, $-((CH_3)_2C)-CH_2$, $-CH_2-((CH_3)_2C)-CH_2-$ and $-CH_2-((CH_3)_2C)_2-CH_2-$.

**13.** Use according to any one of the preceding claims, wherein the epoxy resins ($D^2$) has the formula (VI)

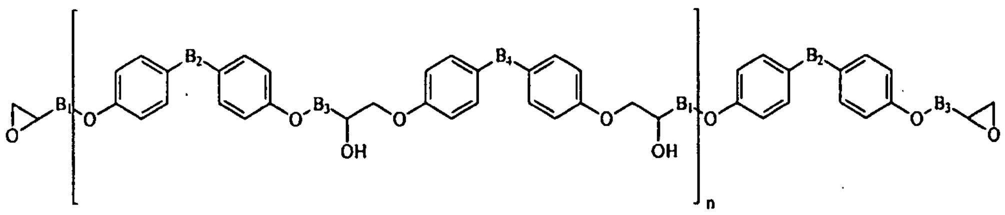

(VI)

wherein
$B_1$ and $B_3$ are independently selected from the group consisting of $-(CH_2)-$, $-(CH_2)_2-$, $-(CH_2)_3-$, $-(CH_2)_4-$, and $-(CH_2)_5-$,
$B_2$ and $B_4$ are independently selected from the group consisting of $-((CH_3)_2C)-$, $-((CH_3)_2C)_2-$, $-((CH_3)_2C)_3-$, $-CH_2-((CH_3)_2C)-$, $-((CH_3)_2C)-CH_2$, $-CH_2-((CH_3)_2C)-CH_2-$ and $-CH_2-((CH_3)_2C)_2-CH_2-$, and
n is from 1 to 20.

**14.** Use according to any one of the preceding claims, wherein the polyethers (D) have a weight average molecular weight ($M_w$) of not more than 25,000 g/mol.

**15.** Use according to any one of the preceding claims, wherein the polyethers (D) are selected from the group consisting of polyethylene glycol having a weight average molecular weight ($M_w$) of about 4,000 g/mol (CAS-no 25322-68-3), polyethylene glycol having a weight average molecular weight ($M_w$) of about 8,000 g/mol (CAS-no 25322-68-3), polyethylene glycol having a weight average molecular weight ($M_w$) of about 10000 g/mol (CAS-no 25322-68-3), polyethylene glycol having a weight average molecular weight ($M_w$) of about 20,000 g/mol (CAS-no 25322-68-3), and poly (2,2-bis[4-(2,3-epoxypropoxy]-phenyl] propane-co-(2-chloromethyl oxirane) (CAS-no 25036-25-3).

**16.** Use according to any one of the preceding claims, wherein the degradation of the organic antioxidants (C) as defined in anyone of the preceding claims 3, 8 and 9 is reduced.

**17.** Use according to any one of the preceding claims, wherein the polyethers (D) reduce the headspace emission according to VDA 277, preferably the headspace emission of 2-methyl-propene according to VDA 277, of at least

30 % of a polymer composition, preferably of a polymer composition as defined in anyone of the claims 2 to 15, compared to the same polymer composition but without polyethers (D) as defined in anyone of the claims 1 to 3 and 10 to 15.

**Patentansprüche**

1. Verwendung von Polyethern (D), um die Kopfraum-Emission bzw. Headspace-Emission gemäß VDA 277, vorzugsweise die Kopfraum-Emission bzw. Headspace-Emission von 2-Methyl-propen gemäß VDA 277, von einem Polymer zu verringern, wobei die Polyether (D) ein Gewichts-mittleres Molekulargewicht ($M_w$) von mehr als 300 g/Mol aufweisen.

2. Verwendung nach Anspruch 1, wobei die Polyether (D) einen Teil von einer Polymer-Zusammensetzung darstellen, wobei die Zusammensetzung zusätzlich zu den Polyethern (D) Polypropylen (A), Talkum (B), organische Antioxidantien (C), und gegebenenfalls Phosphor-Antioxidantien (E) umfasst.

3. Verwendung nach Anspruch 1 oder 2, wobei die Zusammensetzung umfasst

   (a) 1 000 bis 550 000 ppm Talkum (B),
   (b) 100 bis 5 000 ppm phenolische Antioxidantien (C),
   (c) 100 bis 5 000 ppm Polyether (D) mit einem Gewichts-mittleren Molekulargewicht ($M_w$) von mehr als 300 g/Mol, und
   (d) gegebenenfalls 100 bis 5 000 ppm Phosphor-Anti-oxidantien (E), bezogen auf die Zusammensetzung.

4. Verwendung nach einem der vorangehenden Ansprüche, wobei die Polymer-Zusammensetzung keine gehinderten Amin-Licht-Stabilisatoren (F) und/oder Gleitmittel (G) umfasst, wobei Gleitmittel vorzugsweise Fettsäureamide darstellen.

5. Verwendung nach einem der vorangehenden Ansprüche, wobei die Polymer-Zusammensetzung mindestens 50 Gew.-% Poly-propylen umfasst.

6. Verwendung nach einem der vorangehenden Ansprüche, wobei das Polypropylen (A) ein Heterophasen-Propylen-Copolymer (A') darstellt, das eine Polypropylen-Matrix ($A^1$) und ein amorphes Elastomer ($A^2$) umfasst.

7. Verwendung nach einem der vorangehenden Ansprüche, wobei das Talkum (B) Eisen-Reste, vorzugsweise Eisenoxid (FeO) und/oder Eisensilicat, umfasst.

8. Verwendung nach einem der vorangehenden Ansprüche, wobei die organischen Antioxidantien (C) phenolische Antioxidantien (C'), vorzugsweise sterisch gehinderte phenolische Antioxidantien (C'), sind.

9. Verwendung nach einem der vorangehenden Ansprüche, wobei die phenolischen Antioxidantien (C') mindestens einen Rest der Formel (II) umfassen

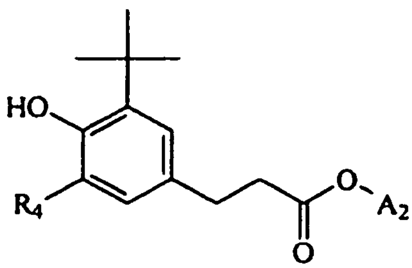

worin
$R_4$ $(CH_3)_3C$-, $CH_3$-, oder H, vorzugsweise $(CH_3)_3C$-, darstellt, und
$A_2$ den verbleibenden Rest von dem phenolischen Antioxidans (C') ausmacht.

**10.** Verwendung nach einem der vorangehenden Ansprüche, wobei die Polyether (D) Polyethylenglycole ($D^1$) und/oder Ep-oxid-Harze ($D^2$) darstellen.

**11.** Verwendung nach einem der vorangehenden Ansprüche, wobei die Epoxid-Harze ($D^2$) mindestens eine Phenyl-Gruppe umfassen.

**12.** Verwendung nach einem der vorangehenden Ansprüche, wobei die Epoxid-Harze ($D^2$) Einheiten, abgeleitet von einem Monomer der Formel (IV), umfassen

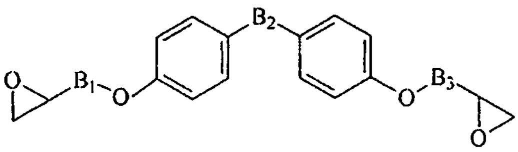

(IV)

worin
$B_1$ und $B_3$ unabhängig ausgewählt sind aus der Gruppe, bestehend aus $-(CH_2)-$, $-(CH_2)_2-$, $-(CH_2)_3-$, $-(CH_2)_4-$, und $-(CH_2)_5-$, und
$B_2$ ausgewählt ist aus der Gruppe, bestehend aus $-((CH_3)_2C)-$, $-((CH_3)_2C)_2-$, $-((CH_3)_2C)_3-$, $-CH_2-((CH_3)_2C)-$, $-((CH_3)_2C)-CH_2$, $-CH_2-((CH_3)_2C)-CH_2-$ und $-CH_2-((CH_3)_2C)_2-CH_2-$.

**13.** Verwendung nach einem der vorangehenden Ansprüche, wobei die Epoxid-Harze ($D^2$) die Formel (VI) aufweisen

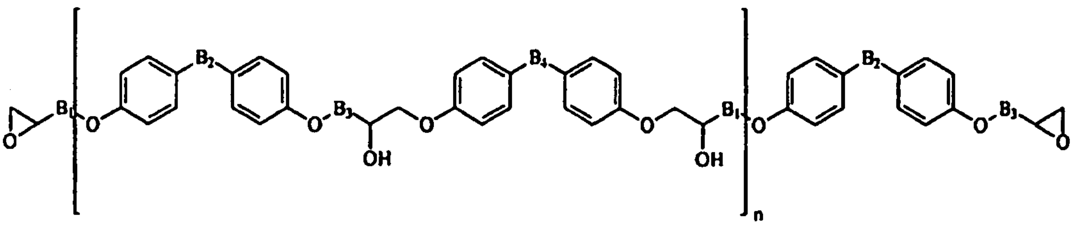

**(VI)**

worin
$B_1$ und $B_3$ unabhängig ausgewählt sind aus der Gruppe, bestehend aus $-(CH_2)$, $-(CH_2)_2-$, $-(CH_2)_3-$, $-(CH_2)_4-$, und $-(CH_2)_5-$,
$B_2$ und $B_4$ unabhängig ausgewählt sind aus der Gruppe, bestehend aus $-((CH_3)_2C)-$, $-((CH_3)_2C)_2-$, $-((CH_3)_2C)_3-$, $-CH_2-((CH_3)_2C)-$, $-((CH_3)_2C)-CH_2$, $-CH_2-((CH_3)_2C)-CH_2-$ und $-CH_2-((CH_3)_2C)_2-CH_2-$, und
n 1 bis 20 ist.

**14.** Verwendung nach einem der vorangehenden Ansprüche, wobei die Polyether (D) ein Gewichts-mittleres Molekulargewicht ($M_w$) von nicht mehr als 25 000 g/Mol aufweisen.

**15.** Verwendung nach einem der vorangehenden Ansprüche, wobei die Polyether (D) ausgewählt sind aus der Gruppe, bestehend aus Polyethylenglycol mit einem Gewichts-mittleren Molekulargewicht ($M_w$) von etwa 4 000 g/Mol (CAS-Nr. 25322-68-3), Polyethylenglycol mit einem Gewichts-mittle-ren Molekulargewicht ($M_w$) von etwa 8 000 g/Mol (CAS-Nr. 25322-68-3), Polyethylenglycol mit einem Gewichts-mitt-leren Molekulargewicht ($M_w$) von etwa 10 000 g/Mol (CAS-Nr. 25322-68-3), Polyethylenglycol mit einem Gewichts-mittleren Molekulargewicht ($M_w$) von etwa 20 000 g/Mol (CAS-Nr. 25322-68-3), und Poly-(2,2-bis-[4-(2,3-epoxy-prop-oxy]-phenyl]-propan-co-(2-chlormethyl-oxiran) (CAS-Nr. 25036-25-3).

16. Verwendung nach einem der vorangehenden Ansprüche, wobei der Abbau von den organischen Antioxidantien (C), wie in einem der vorangehenden Ansprüche 3, 8 und 9 definiert, verringert ist.

17. Verwendung nach einem der vorangehenden Ansprüche, wobei die Polyether (D) die Kopfraum-Emission bzw. Headspace-Emission gemäß VDA 277, vorzugsweise die Kopfraum-Emission bzw. Headspace-Emission von 2-Methyl-propen gemäß VDA 277, von mindestens 30 % von einer Polymer-Zusammensetzung, vorzugsweise von einer Polymer-Zusam-mensetzung, wie in einem der Ansprüche 2 bis 15 definiert, verglichen mit der gleichen Polymer-Zusammen-setzung, jedoch ohne Polyether (D), wie in einem der Ansprüche 1 bis 3 und 10 bis 15 definiert, verringern.

## Revendications

1. Utilisation de polyéthers (D) pour réduire l'émission de composés volatils selon VDA 277, de préférence, l'émission de composés volatils de 2-méthyl-propène selon VDA 277, par un polymère, lesdits polyéthers (D) ayant un poids moléculaire moyen en poids ($M_w$) supérieur à 300 g/mol.

2. Utilisation selon la revendication 1, où les polyéthers (D) font partie d'une composition polymère, ladite composition comprenant, en plus des polyéthers (D), un polypropylène (A), du talc (B), des antioxydants organiques (C), et éventuellement des antioxydants phosphoreux (E).

3. Utilisation selon la revendication 1 ou 2, où la composition comprend:

   (a) 1 000 à 550 000 ppm de talc (B),
   (b) 100 à 5 000 ppm d'antioxydants phénoliques (C),
   (c) 100 à 5 000 ppm de polyéthers (D) ayant un poids moléculaire moyen en poids ($M_w$) supérieur à 300 g/mol, et
   (d) éventuellement 100 à 5 000 ppm d'antioxydants phosphoreux (E), sur la base de la composition.

4. Utilisation selon l'une quelconque des revendications précédentes, où la composition polymère ne comprend pas de photostabilisants à amine encombrée (F) et/ou d'agents glissants (G), les agents glissants étant, de préférence, des amides d'acides gras.

5. Utilisation selon l'une quelconque des revendications précédentes, où la composition polymère comprend au moins 50% en poids de polypropylène.

6. Utilisation selon l'une quelconque des revendications précédentes, où le polypropylène (A) est un copolymère de propylène hétérophasique (A') comprenant une matrice de polypropylène ($A^1$) et un élastomère amorphe ($A^2$).

7. Utilisation selon l'une quelconque des revendications précédentes, où le talc (B) comprend des résidus de fer, de préférence, l'oxyde de fer (FeO) et/ou le silicate de fer.

8. Utilisation selon l'une quelconque des revendications précédentes, où les antioxydants organiques (C) sont des antioxydants phénoliques (C'), de préférence, des antioxydants phénoliques à empêchement stérique (C').

9. Utilisation selon l'une quelconque des revendications précédentes, où les antioxydants phénoliques (C') comprennent au moins un résidu de formule (II)

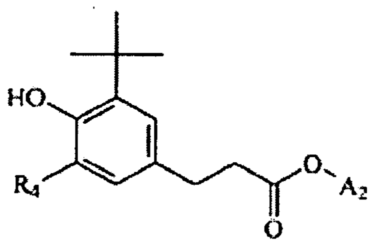

dans laquelle
$R_4$ représente $(CH_3)_3C$-, $CH_3$- ou H, de préférence $(CH_3)_3C$-, et
$A_2$ constitue la partie restante de l'antioxydant phénolique (C').

**10.** Utilisation selon l'une quelconque des revendications précédentes, où les polyéthers (D) sont des polyéthylèneglycols ($D^1$) et/ou des résines époxy ($D^2$).

**11.** Utilisation selon l'une quelconque des revendications précédentes, où les résines époxy ($D^2$) comprennent au moins un groupe phényle.

**12.** Utilisation selon l'une quelconque des revendications précédentes, où les résines époxy ($D^2$) comprennent des motifs dérivés d'un monomère de formule (IV)

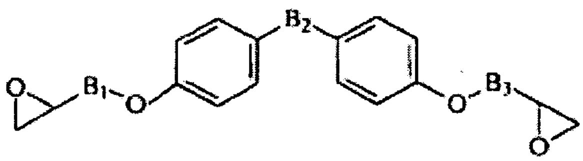

(IV)

dans laquelle
$B_1$ et $B_3$ sont indépendamment choisis dans le groupe constitué par $-(CH_2)-$, $-(CH_2)_2-$, $-(CH_2)_3-$,$-(CH_2)_4-$, et $-(CH_2)_5-$, et
$B_2$ est choisi dans le groupe constitué par $-((CH_3)_2C)-$, $-((CH_3)_2C)_2-$, $-((CH_3)_2C)_3-$, $-CH_2-((CH_3)_2C)-$, $-((CH_3)_2C)-CH_2-$, $-CH_2-((CH_3)_2C)-CH_2-$ et $-CH_2-((CH_3)_2C)_2-CH_2-$.

**13.** Utilisation selon l'une quelconque des revendications précédentes, où les résines époxy ($D^2$) répondent à la formule (VI)

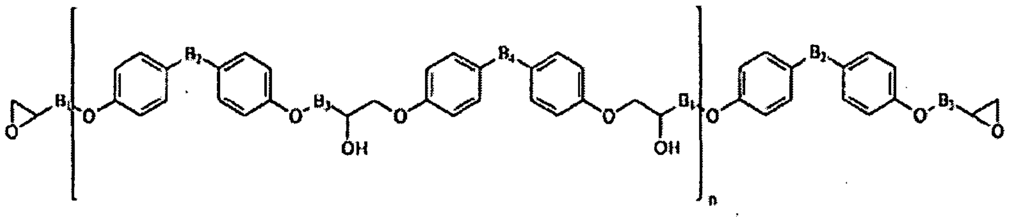

(VI)

dans laquelle
$B_1$ et $B_3$ sont indépendamment choisis dans le groupe constitué par $-(CH_2)-$, $-(CH_2)_2-$,$-(CH_2)_3-$,$-(CH_2)_4-$, et $-(CH_2)_5-$,
$B_2$ et $B_4$ sont indépendamment choisis dans le groupe constitué par $-((CH_3)_2C)-$, $-((CH_3)_2C)_2-$, $-((CH_3)_2C)_3-$, $-CH_2-((CH_3)_2C)-$, $-((CH_3)_2C)-CH_2-$, $-CH_2-((CH_3)_2C)-CH_2-$ et $-CH_2-((CH_3)_2C)_2-CH_2-$, et
n vaut de 1 à 20.

**14.** Utilisation selon l'une quelconque des revendications précédentes, où les polyéthers (D) ont un poids moléculaire moyen en poids ($M_w$) qui ne dépasse pas les 25 000 g/mol.

**15.** Utilisation selon l'une quelconque des revendications précédentes, où les polyéthers (D) sont choisis dans le groupe constitué par un polyéthylèneglycol ayant un poids moléculaire moyen en poids ($M_w$) d'environ 4 000 g/mol (CAS-n° 25322-68-3), un polyéthylèneglycol ayant un poids moléculaire moyen en poids ($M_w$) d'environ 8 000 g/mol (CAS-n° 25322-68-3), un polyéthylèneglycol ayant un poids moléculaire moyen en poids ($M_w$) d'environ 10000 g/mol (CAS-n° 25322-68-3), un polyéthylèneglycol ayant un poids moléculaire moyen en poids ($M_w$) d'environ 20 000 g/mol (CAS-n° 25322-68-3), et le poly(2,2-bis[4-(2,3-époxypropoxy]phényl]propane-co-(2-chlorométhyloxirane)

(CAS-n° 25036-25-3).

**16.** Utilisation selon l'une quelconque des revendications précédentes, où la dégradation des antioxydants organiques (C) tels que définis dans l'une quelconque des revendications 3, 8 et 9 précédentes est réduite.

**17.** Utilisation selon l'une quelconque des revendications précédentes, où les polyéthers (D) réduisent l'émission de composés volatils selon VDA 277, de préférence, l'émission de composés volatils de 2-méthyl-propène selon VDA 277, d'au moins 30% d'une composition polymère, de préférence, d'une composition polymère telle que définie dans l'une quelconque des revendications 2 à 15, par rapport à la même composition polymère mais sans les polyéthers (D) tels que définis dans l'une quelconque des revendications 1 à 3 et 10 à 15.